Europäisches Patentamt

European Patent Office

Office européen des brevets

(11) **EP 0 716 126 B1**

(19)

(12) **FASCICULE DE BREVET EUROPEEN**

(45) Date de publication et mention
de la délivrance du brevet:
**09.02.2000 Bulletin 2000/06**

(51) Int Cl.⁷: **C08L 77/00**, C08L 77/02,
C08L 77/06
// (C08L77/00, 23:08)

(21) Numéro de dépôt: **95203163.1**

(22) Date de dépôt: **18.11.1995**

(54) **Composition translucide flexible à base de polyamide et articles obtenus à partir de cette composition**

Transparente flexible Polyamidzusammensetzung und daraus erhaltene Gegenstände

Translucent flexible polyamide composition and articles obtained therefrom

(84) Etats contractants désignés:
**AT BE CH DE DK ES FR GB GR IE IT LI LU NL PT
SE**

(30) Priorité: **22.11.1994 FR 9413957**

(43) Date de publication de la demande:
**12.06.1996 Bulletin 1996/24**

(73) Titulaire: **ELF ATOCHEM S.A.**
**92800 Puteaux, Hauts-de-Seine (FR)**

(72) Inventeurs:
• **Ladouce, Béatrice**
**F-92400 Courbevoie (FR)**

• **Montanari, Thibaut**
**F-27300 Bernay (FR)**
• **Bouilloux, Alain**
**F-27300 Bernay (FR)**
• **Guibouin, Christelle**
**F-27300 Bernay (FR)**
• **Perret, Patrice**
**F-27470 Serquigny (FR)**

(56) Documents cités:
**EP-A- 0 072 480** **EP-A- 0 096 264**
**EP-A- 0 218 665**

## Description

La présente invention a pour objet une composition translucide flexible à base de polyamide.

Des compositions à matrice de polyamide et de polymères éthyléniques sont déjà connues pour leur résistance au choc.

En particulier, EP 096 264 décrit un matériau à haute résistance à l'impact contenant :

(A) un polyamide thermoplastique ayant une viscosité relative de 2,5 à 5, et

(B) de 5 à 60 % en poids, par rapport à (A), d'un terpolymère non réticulé constitué de :

(a) 55 à 79,5 % en poids d'éthylène,

(b) 20 à 40 % en poids d'au moins un (meth)acrylate d'alkyle primaire ou secondaire, et

(c) 0,5 à 8 % en poids d'un monomère fonctionnellement acide (par exemple l'anhydride maléique).

EP 218 665 décrit des compositions contenant de 50 à 95 % en poids d'au moins une résine polyamide, et de 5 à 50 % en poids d'au moins un polymère d'éthylène contenant de 0,9 à 16 % en moles de motifs dérivés de l'anhydride maléique et/ou d'au moins un acrylate ou methacrylate d'alkyle dont le groupe alkyle a de 1 à 6 atomes de carbone. Ledit polymère d'éthylène est présent sous forme d'un mélange de copolymère éthylène/(meth)acrylate d'alkyle (A) et de terpolymère éthylène/anhydride maléique/(meth)acrylate d'alkyle (B), le rapport pondéral (A)/(B) étant compris entre 1/3 et 3.

On connaît également EP-A-072.480 qui décrit une composition résistante à l'impact comprenant de 50 à 90 % en poids de polyamide, de 1 à 45 % en poids d'une résine ionomère éthylénique et de 0,5 à 40 % en poids d'un copolymère éthylénique élastomérique.

Enfin le brevet US 3 373 223 décrit un alliage polymère essentiellement constitué de 25 à 90 % en poids de polyoléfine, 5 à 70 % en poids de polyamide et 1 à 10 % en poids d'un copolymère éthylène/acide (meth)acrylique.

Cependant, ces compositions qui présentent une résistance au choc améliorée comparativement à la matrice de polyamide employée seule nécessitent des températures de mise en oeuvre élevées -souvent supérieures à 270 °C- et ne sont généralement pas simultanément translucides et flexibles.

On a maintenant trouvé une composition translucide et flexible à base de résine polyamide, caractérisée en ce qu'elle comprend :

(A) de 50 % à 95 % en poids

1) d'au moins une résine polyamide (I) dont la transmission lumineuse à 700 nm est supérieure à 15 % et de préférence supérieure à 30 % (sur une plaque d'épaisseur 1 mm) et qui est choisie parmi les polyamides qui contiennent des motifs aliphatiques contenant au moins 7 atomes de carbone et/ou cycloaliphatiques et/ou aromatiques, les mélanges de polymères contenant au moins 50 % en poids des polyamides précédents où la phase matricielle est constituée de polyamide, et les élastomères thermoplastiques (TPE) à base de polyamide appelés aussi polyétheramides,

2) d'additifs divers (IV) tels que des stabilisants, des agents de démoulage, des lubrifiants, des accélérateurs de cristallisation, des pigments, des colorants ou des charges organiques et/ou minérales, des agents antioxydants,

3) éventuellement d'au moins un agent plastifiant (V) représentant de 0 à 50 % du poids de (A), de préférence moins de 20 % du poids de (A),

(B) de 5 % à 50 % en poids, et de préférence de 10 à 40 % en poids :

(a) d'au moins un terpolymère éthylène/(meth)acrylate d'alkyle/anhydride d'acide dicarboxylique insaturé (II) comprenant de 77 à 99,2 % en mole d'au moins un motif dérivé d'éthylène, de 0 % à 20% en mole d'au moins un motif dérivé de (meth)acrylate(s) d'alkyle et de 0,8 à 3 % en mole d'au moins un motif dérivé d'anhydride (s) d'acide dicarboxylique insaturé et ayant un indice de fluidité compris entre 0,1 et 400 g/10 min (selon la norme NFT 51-016, 190°C / charge de 2,16 kg),

(b) d'au moins un copolymère éthylène/(meth)acrylate d'alkyle (III) comprenant au moins 78 % en mole de motifs dérivés d'éthylène, et jusqu'à 22 % en mole d'au moins un motif dérivé de (meth)acrylate(s) d'alkyle et ayant un indice de fluidité compris entre 0,1 et 400 g/10 min (selon la norme NFT 51-016, 190°C / charge de 2,16 kg),

avec la condition supplémentaire que la relation suivante soit vérifiée : $1/30 \leq (b)/(a) \leq 2$, et de préférence $(b)/(a) \leq 2/3$,

la combinaison des caractéristiques ci-dessus conduisant pour ladite composition à un module de flexion, mesurable selon la norme ISO 178, strictement inférieur à 750 MPa. Avantageusement, le module de flexion de la composition est strictement inférieur à 500 MPa.

Pour des raisons de simplification, on emploie dans tout le texte le terme "terpolymère" même dans les cas où (II) ne contient aucun motif dérivé de (meth)acrylate(s) d'alkyle.

Les groupements alkyle de l'acrylate ou methacrylate d'alkyle entrant dans les terpolymères (II) et/ou dans les copolymères (III) peuvent être linéaires, ramifiés ou cycliques, aliphatiques, cycloaliphatiques et/ou aromatiques et comporter jusqu'à 10 atomes de carbone.

A titre d'illustration d'acrylate ou de methacrylate d'alkyle dont dérivent les terpolymères (II) et/ou les copolymères (III), on peut citer notamment l'acrylate de méthyle, l'acrylate d'éthyle, l'acrylate de n-butyle, l'acrylate d'isobutyle, l'acrylate d'éthyl-2 hexyle, l'acrylate de cyclohexyle, le methacrylate de méthyle, le methacrylate d'éthyle. Parmi ces acrylates et methacrylates d'alkyle, on préfère tout particulièrement l'acrylate d'éthyle (EA), l'acrylate de n-butyle (BA) et l'acrylate de méthyle (MA).

A titre d'illustration d'anhydride d'acide dicarboxylique insaturé dont dérivent les terpolymères (II), on peut citer l'anhydride itaconique, l'anhydride citraconique, l'anhydride méthyl-2 maléique, l'anhydride diméthyl-2,3 maléique, l'anhydride bicyclo(2.2.2) oct-5-ène 2,3 dicarboxylique, et de préférence l'anhydride maléique.

Par résine polyamide selon l'invention, on entend les polyamides ou PA qui contiennent des motifs aliphatiques contenant au moins 7 atomes de carbone et/ou cycloaliphatiques et/ou aromatiques .

On peut citer les résines obtenues par polycondensation d'un ou plusieurs lactames, d'$\alpha,\omega$-aminoacides ou par une polycondensation sensiblement stoechiométrique d'une ou plusieurs diamine(s) aliphatique(s) et d'un ou plusieurs diacide(s) (s) carboxylique(s) (s) aliphatique(s). On peut utiliser un excès de diamine de manière à obtenir un excès de groupes terminaux amine par rapport aux groupes terminaux carboxyle dans le polyamide.

Les lactames contiennent au moins 7 atomes de carbone, de préférence au moins 10. Les lactames préférés sont le décalactame, l'undécalactame, le dodécalactame.

Les $\alpha,\omega$-aminoacides préférés sont les acides 10-aminodécanoïque, 11-aminoundécanoïque, 12-aminododécanoïque.

Les diamines aliphatiques sont des $\alpha,\omega$-diamines contenant entre les groupements amino terminaux au moins 6 atomes de carbone, de préférence de 6 à 10. La chaîne carbonée peut être linéaire (polyméthylènediamine) ou ramifiée. Des diamines préférées sont l'hexaméthylènediamine (HMDA), la dodécaméthylènediamine.

Les diacides carboxyliques aliphatiques sont des $\alpha,\omega$-diacides carboxyliques possédant au moins 5 atomes de carbone (non compris les atomes de carbone des groupements carboxyliques), de préférence au moins 6, dans la chaîne carbonée linéaire ou ramifiée. Les diacides préférés sont les acides azélaïque, sébacique et 1,12-dodécanoïque.

A titre d'illustration de telles résines PA, on peut mentionner :

le polyhexaméthylènesébacamide (PA-6,10),
le polyhexaméthylènedodécanediamide (PA-6,12),
le poly(undécanoamide) (PA-11),
le polylauryllactame (PA-12),
le polydodécaméthylènedodécanediamide (PA-12,12).

Les PA ont une masse moléculaire moyenne en nombre $\overline{Mn}$ en général supérieure ou égale à 5.000. Leur viscosité inhérente (mesurée à 20 °C pour un échantillon de 0,5 g dans 100 g de méta-crésol) est en général supérieure à 0,7.

Par PA au sens de la présente invention, on entend également les mélanges de polymères contenant au moins 50 % en poids des polyamides décrits ci-dessus où la phase matricielle est constituée de polyamide.

A titre d'exemple de mélanges, on peut citer les mélanges de polyamides aliphatiques et de polyamides semi-aromatiques et/ou amorphes, tels que ceux décrits dans EP 550 308, ainsi que les mélanges PA/polyoléfine et notamment ceux décrits dans EP 342 066.

Par PA selon l'invention, on entend également les élastomères thermoplastiques (TPE) à base de polyamide qui sont des copolymères blocs, appelés aussi polyétheramides, dont les séquences rigides sont constituées de polyamide et les séquences souples cristallisables de polyéther.

Parmi les agents plastifiants (V) que l'on peut incorporer aux compositions selon l'invention, on peut par exemple citer le butylbenzène sulfonamide (BBSA), l'éthylhexylpara-hydroxy benzoate (EHPB), le décylhexylpara-hydroxy benzoate (DHPB).

En général, les agents plastifiants présentent l'inconvénient d'exsuder hors du matériau polymérique auquel ils sont incorporés de façon plus ou moins rapide (quelques jours à quelques mois) entraînant ainsi perte de masse et variation dimensionnelle du matériau.

Les compositions selon l'invention qui sont plastifiées i-e pour lesquelles (V)>0 présentent l'avantage supplémentaire, par rapport à des compositions à base de polyamide contenant seulement du plastifiant (V) mais ne contenant ni terpolymère (II) ni copolymère (III), de posséder une flexibilité similaire, et ce, pour un taux de plastifiant plus faible, donc pour une exsudation réduite et une meilleure stabilité dimensionnelle.

Les compositions ci-dessus peuvent être obtenues de façon connue par toute technique de mélangeage des constituants à l'état fondu telle que, par exemple, l'extrusion ou compoundage sur extrudeuse mono- ou double vis, sur co-malaxeur ou par toute technique continue ou discontinue , comme par exemple à l'aide d'un mélangeur interne.

La présente invention concerne également les procédés de transformation desdites compositions, ainsi que les articles obtenus. Les matériaux ou articles obtenus notamment -tubes, films, tuyaux, plaques, fibres, etc., sont translucides et présentent de bonnes propriétés mécaniques et chimiques, telles qu'une bonne flexibilité.

Parmi toutes les méthodes conventionnelles de transformation utilisées dans l'industrie des thermoplastiques qui conviennent pour la réalisation d'articles à base de compositions selon l'invention, on citera tout particulièrement les techniques d'extrusion.

Les matériaux obtenus par extrusion à partir des compositions selon l'invention, par exemple des tubes, notamment des tubes monocouches présentent un état de surface lisse ; leur transparence n'est donc pas perturbée par des défauts de la surface.

L'extrudabilité des compositions selon l'invention lors de leur transformation est notablement améliorée par rapport à l'extrudabilité de compositions à base de PA ne contenant pas simultanément terpolymère(s) (II) et copolymère(s) (III) ; en pratique, cette meilleure extrudabilité peut se traduire des températures d'extrusion réduites (de l'ordre d'une trentaine de degrés Celsius) à tenue du produit fondu et à aspect final du tube similaires.

Dans le cas de compositions à base de PA plastifié -(V) >0-, l'expression "meilleure extrudabilité" se traduit par des températures d'extrusion semblables à celles du PA plastifié ne contenant ni terpolymère(s) (II) ni copolymère (s) (III).

Les exemples suivants illustrent l'invention.

EXEMPLE 1

Dans une extrudeuse double vis ou dans un co-malaxeur, on extrude sous forme de joncs que l'on granule un mélange comprenant

* 70 % en poids de PA-11 plastifié à 12 % en poids avec du BBSA dont la viscosité inhérente est comprise entre 1 et 1,2 et la température de fusion est compris e entre 176 et 183 °C
* 25 % en poids de terpolymère d'éthylène/BA/anhydride maléique de composition molaire 94,4/4,6/1 d'indice de fluidité égal à 4,5 g/lOmin mesuré selon la norme NFT 51-016 (190° C/ charge de 2,16 kg),
* 5 % en poids de copolymère d'éthylène et de MA de composition molaire 94,4/5,6 d'indice de fluidité égal à 0,3 g/lOmin mesuré selon la norme NFT 51-016 (190° C/ charge de 2,16 kg),.

On mesure le module de flexion, l'exsudation et la translucidité de la composition ainsi obtenue.

Le module de flexion est mesuré selon la norme ISO 178 ; à titre comparatif on donne également le module de flexion du PA correspondant seul.

L'exsudation est déterminée par la perte de poids subie par un échantillon après 30 jours dans un four ventilé à l'air à 120°C.

La translucidité est déterminée par la transmission lumineuse à 700 nm sur une plaque d'épaisseur 1 mm. Une transmission lumineuse supérieure à 15 % est jugée acceptable et particulièrement avantageuse lorsqu'elle est supérieure à 30 %.

Cette composition est ensuite extrudée sous forme de tube de diamètre interne égal à 6 mm et de diamètre externe égal à 8 mm à l'aide d'une extrudeuse équipée a) d'une vis adaptée à l'extrusion de PA plastifié de diamètre 60 mm et de rapport longueur/diamètre 24 b) ainsi que d'un outillage revêtu de chrome ou de nickel. On détermine l'extrudabilité en appréciant la facilité de mise en oeuvre lors de l'extrusion du tube (tenue de la masse fondue, calibrage du diamètre du tube, non-casse) et en mesurant la température maximale du profil des températures d'extrusion nécessaires à l'obtention d'un tube de bon aspect (aspect de surface lisse). On qualifie l'extrudabilité de "mauvaise" lorsque le tube présente un mauvais aspect de surface et/ou le procédé de transformation est mal maîtrisé et/ou le profil de température nécessaire à l'obtention d'un tube de bon aspect est trop élevé.

Les résultats sont réunis dans le tableau 1.

EXEMPLES 2.a A 2.c (comparatifs)

A titre comparatif, on extrude des tubes de dimensions identiques à celui décrit à l'exemple 1 à partir de PA-11

a) contenant un taux différent de plastifiant (28-35 % en poids) dont la viscosité inhérente est comprise entre 1,1 et 1,4 et la température de fusion est comprise entre 170 et 176 °C (exemple 2.a)

b) contenant le même taux de plastifiant que celui décrit à l'exemple 1 mais dont la viscosité inhérente est comprise entre 1,4 et 1,6 (exemple 2.b).

c) ne contenant pas de plastifiant et dont la viscosité inhérente est comprise entre 1,3 et 1,6 et la température de fusion est comprise entre 183 et 187 °C (exemple 2.c).

On mesure le module de flexion, l'exsudation et la translucidité des échantillons de PA-11 ainsi extrudés ainsi que l'extrudabilité des tubes obtenus. Les résultats sont réunis dans le tableau 1.

EXEMPLES 2.d A 2.f (comparatifs)

A titre comparatif, on extrude puis met en forme de tube de mêmes dimensions que celui décrit à l'exemple 1

d) un mélange (exemple 2.d) comprenant

* 70 % en poids du même PA-11 que celui de l'exemple 1 (plastifié à 12 % en poids avec du BBSA)
* 30 % en poids de terpolymère d'éthylène/BA/anhydride maléique de composition molaire 94,4/4,6/1 d'indice de fluidité égal à 4,5 g/10min mesuré selon la norme NFT 51-016 (190° C/ charge de 2,16 kg).

e) un mélange (exemple 2.e) comprenant

* 70 % en poids du même PA-11 que celui de l'exemple 1 (plastifié à 12 % en poids avec du BBSA)
* 30 % en poids de terpolymère d'éthylène/BA/anhydride maléique de composition molaire 88,2/11,5/0,3 d'indice de fluidité égal à 7 g/10min mesuré selon la norme NFT 51-016 (190° C/ charge de 2,16 kg).

f) un mélange (exemple 2.f) comprenant

* 70 % en poids du même PA-11 que celui de l'exemple 1 (plastifié à 12 % en poids avec du BBSA)
* 30 % en poids de copolymère d'éthylène/anhydride maléique de composition molaire 94,4/5,6 .

On mesure le module de flexion, l'exsudation et la translucidité des échantillons à base de PA-11 ainsi extrudés ainsi que l'extrudabilité des tubes obtenus. Les résultats sont réunis dans le tableau 1.

EXEMPLE 3

On extrude puis met en forme de tube de mêmes dimensions que celui décrit à l'exemple 1 un mélange comprenant

* 70 % en poids de PA-12 plastifié à 12 % en poids avec du BBSA et dont la viscosité inhérente est comprise entre 1,3 et 1,7 et la température de fusion est comprise entre 168 et 174 °C
* 25 % en poids de terpolymère d'éthylène/BA/anhydride maléique de composition molaire 94,4/4,6/1 d'indice de fluidité égal à 4,5 g/10min mesuré selon la norme NFT 51-016 (190° C/ charge de 2,16 kg),
* 5 % en poids de copolymère d'éthylène et de MA de composition molaire 94,4/5,6.

On mesure le module de flexion, l'exsudation et la translucidité de l'échantillon à base de PA-12 ainsi extrudé ainsi que l'extrudabilité du tube obtenu. Les résultats sont réunis dans le tableau 1.

EXEMPLE 4 (comparatif)

A titre comparatif, on extrude puis met en forme de tube de mêmes dimensions que celui décrit à l'exemple 1 un mélange comprenant

* 75 % en poids de PA-12 de mêmes caractéristiques que celui de l'exemple 3 (contenant le même taux de BBSA)
* 25 % en poids de EPRm copolymère élastomérique éthylène/propylène/anhydride maléique comprenant de 0,4 à 0,8 % en masse d'anhydride maléique.

On mesure le module de flexion, l'exsudation et la translucidité de l'échantillon à base de PA-12 ainsi extrudé ainsi que l'extrudabilité du tube obtenu. Les résultats sont réunis dans le tableau 1.

EXEMPLE 5 (comparatif)

A titre comparatif, on extrude puis met en forme de tube de mêmes dimensions que celui décrit à l'exemple 1 un mélange comprenant

*   70 % en poids de PA-6 non plastifié dont la température de fusion est comprise entre 217 et 223 °C
*   25 % en poids de terpolymère d'éthylène/BA/anhydride maléique de composition molaire 94,4/4,6/1 d'indice de fluidité égal à 4,5 g/10min mesuré selon la norme NFT 51-016 (190° C/ charge de 2,16 kg),
*   5 % en poids de copolymère d'éthylène et de MA de composition molaire 94,4/5,6.

On mesure le module de flexion, l'exsudation et la translucidité de l'échantillon à base de PA-6 ainsi extrudé ainsi que l'extrudabilité du tube obtenu. Les résultats sont réunis dans le tableau 1.

Tableau 1

| Exemple | Module de flexion du PA seul (MPa) | Module de flexion de la composition (MPa) | Exsudation (%) | Translucidité (%) | Extrudabilité pour un débit de l'extrudeuse de 20m/min | Extrudabilité Température maximale du profil optimal d'extrusion (°C) |
|---|---|---|---|---|---|---|
| 1 | 1.100 | 150-200 | 8-9 | > 30 | très bonne | ≤ 240 |
| 2.a | 1.100 | 150 | 28-30 | > 30 | très bonne | 220-230 |
| 2.b | 1.100 | 300-350 | 11-12 | > 30 | très bonne | ≤ 240 |
| 2.c | 1.100 | 1.100 | 0 | > 30 | très bonne | ≤ 240 |
| 2.d | 1.100 | 150-200 | 8-9 | > 30 | mauvaise | ≥260 |
| 2.e | 1.100 | 150-200 | 8-9 | < 15 | mauvaise | > 260 |
| 2.f | 1.100 | 150-200 | 8-9 | < 15 | mauvaise | * |
| 3 | 1.200 | 150-200 | 8-9 | > 30 | très bonne | ≤ 240 |
| 4 | 1.200 | 200 | 8-9 | < 15 | bonne | ≥ 250 |
| 5 | 2.200 | 1.000-1.200 | 0 | < 15 | | |

* : gonflement du tube ; procédé non maîtrisable

EP 0 716 126 B1

**Revendications**

1. Composition translucide et flexible à base de résine polyamide, caractérisée en ce qu'elle comprend :

    (A) de 50 % à 95 % en poids

      1) d'au moins une résine polyamide (I) dont la transmission lumineuse à 700 nm est supérieure à 15 % et de préférence supérieure à 30 % (sur une plaque d'épaisseur 1 mm) et qui est choisie parmi les polyamides qui contiennent des motifs aliphatiques contenant au moins 7 atomes de carbone et/ou cycloaliphatiques et/ou aromatiques, les mélanges de polymères contenant au moins 50 % en poids des polyamides précédents où la phase matricielle est constituée de polyamide, et les élastomères thermoplastiques (TPE) à base de polyamide appelés aussi polyétheramides,
      2) d'additifs divers (IV) tels que des stabilisants, des agents de démoulage, des lubrifiants, des accélérateurs de cristallisation, des pigments, des colorants ou des charges organiques et/ou minérales, des agents antioxydants,
      3) éventuellement d'au moins un agent plastifiant (V) représentant de 0 à 50 % du poids de (A), de préférence moins de 20 % du poids de (A),

    (B) de 5 % à 50 % en poids, et de préférence de 10 à 40 % en poids :

      (a) d'au moins un terpolymère éthylène/(meth)acrylate d'alkyle/anhydride d'acide dicarboxylique insaturé (II) comprenant de 77 à 99,2 % en mole d'au moins un motif dérivé d'éthylène, de 0 % à 20% en mole d'au moins un motif dérivé de (meth)acrylate(s) d'alkyle et de 0,8 à 3 % en mole d'au moins un motif dérivé d'anhydride(s) d'acide dicarboxylique insaturé et ayant un indice de fluidité compris entre 0,1 et 400 g/10 min (selon la norme NFT 51-016, 190°C / charge de 2,16 kg),
      (b) d'au moins un copolymère éthylène/(meth)acrylate d'alkyle (III) comprenant au moins 78 % en mole de motifs dérivés d'éthylène, et jusqu'à 22 % en mole d'au moins un motif dérivé de (meth)acrylate(s) d'alkyle et ayant un indice de fluidité compris entre 0,1 et 400 g/10 min (selon la norme NFT 51-016, 190°C / charge de 2,16 kg),

    avec la condition supplémentaire que la relation suivante soit vérifiée : $1/30 \leq (b)/(a) \leq 2$, et de préférence (b)/(a) $\leq 2/3$,
    la combinaison des caractéristiques ci-dessus conduisant pour ladite composition à un module de flexion, mesurable selon la norme ISO 178, strictement inférieur à 750 MPa.

2. Composition selon la revendication 1, caractérisée en ce que la résine polyamide (I) est choisie parmi le PA-11, le PA-12 et/ou le PA-12,12.

3. Composition selon la revendication 1 ou 2, caractérisée en ce que les motifs de (meth)acrylates d'alkyle dont dérivent les terpolymères (II) et/ou les copolymères (III) sont choisis parmi les acrylates de méthyle, éthyle, n-butyle, isobutyle, éthyl-2 hexyle, cyclohexyle, et les methacrylates de méthyle, éthyle et avantageusement parmi les acrylates d'éthyle (EA), n-butyle (BA) et l'acrylate de méthyle (MA).

4. Composition selon l'une des revendications 1 à 3, caractérisée en ce que l'anhydride d'acide dicarboxylique insaturé dont dérivent les terpolymères (II) est l'anhydride maléique.

5. Matériaux obtenus par des méthodes conventionnelles de transformation, utilisées dans l'industrie des thermoplastiques, des compositions selon l'une des revendications 1 à 4.

6. Matériaux selon la revendication 5 obtenus par les techniques d'extrusion, notamment tubes monocouches.


**Patentansprüche**

1. Transparente und biegsame Zusammensetzung auf Polyamidharzbasis, dadurch gekennzeichnet, daß sie enthält:

    (A) 50 Gew.-% bis 95 Gew.-%

(1) mindestens eines Polyamidharzes (I), dessen Lichtdurchlassgrad bei 700 nm größer als 15 % und vorzugsweise größer als 30 % ist (bei einer Platte mit einer Dicke von 1 mm) und das unter den Polyamiden, die aliphatische Einheiten mit mindestens 7 Kohlenstoffatomen und/oder cycloaliphatische Einheiten und/oder aromatische Einheiten enthalten, den Mischungen von Polymeren, die mindestens 50 Gew.-% der vorgenannten Polyamide enthalten, bei denen die Matrixphase aus Polyamiden besteht, und den thermoplastischen Elastomeren (TPE) auf Polyamidbasis, auch Polyetheramide genannt, ausgewählt ist,
(2) verschiedener Additive (IV), wie z.B. Stabilisatoren, Trennmittel, Schmiermittel, Kristallisationsbeschleuniger, Pigmente, organische und/oder anorganische Farbstoffe oder Füllstoffe, Antioxidantien,
(3) gegebenenfalls mindestens eines Weichmachers (V), der 0 bis 50 Gew.-%, vorzugsweise weniger als 20 Gew.-%, von (A) ausmacht,

(B) 5 bis 50 Gew.-% und vorzugsweise 10 bis 40 Gew.-%

(a) mindestens eines Terpolymeren aus Ethylen/Alkyl(meth)acrylat/Anhydrid einer ungesättigten Dicarbonsäure (II), das 77 bis 99,2 Mol-% mindestens einer von Ethylen abgeleiteten Einheit, 0 bis 20 Mol-% wenigstens einer von Alkyl(meth)acrylat(en) abgeleiteten Einheit und 0,8 bis 3 Mol-% mindestens einer von Anhydriden ungesättigter Dicarbonsäure abgeleiteten Einheit enthält und eine Fließzahl zwischen 0,1 und 400 g/10 min (gemäß Norm NFT 51-016, 190 °C/2,16 kg Belastung) aufweist,
(b) mindestens eines Ethylen/Alkyl(meth)acrylat Copolymeren (III), das mindestens 78 Mol-% einer von Ethylen abgeleiteten Einheit und bis zu 22 Mol-% mindestens einer von Alkyl(meth)acrylat(en) abgeleiteten Einheit enthält und eine Fließzahl zwischen 0,1 und 400 g/10 min (gemäß Norm NFT 51-016, 190 °C/ 2,16 kg Belastung) aufweist,

mit der zusätzlichen Bedingung, daß das folgende Verhältnis eingehalten wird: $1/30 \leq (b)/(a) \leq 2$ und vorzugsweise $(b)/(a) \leq 2/3$,
wobei die Kombination der obigen Eigenschaften für die genannte Zusammensetzung zu einem Elastizitätsmodul des Biegeversuchs, meßbar gemäß Norm ISO 178, von deutlich weniger als 750 MPa führt.

**2.** Zusammensetzung nach Anspruch 1, dadurch gekennzeichnet, daß das Polyamidharz (I) aus PA-11, PA-12 und/ oder PA-12,12 gewählt ist.

**3.** Zusammensetzung nach Anspruch 1 oder 2, dadurch gekennzeichnet, daß die Alkyl(meth)acrylateinheiten, von denen sich die Terpolymere (II) und/oder die Copolymere (III) ableiten, aus den Methyl-, Ethyl-, n-Butyl-, Isobutyl-, Ethyl-2-hexyl-, Cyclohexylacrylaten sowie den Methyl- und Ethylmethacrylaten, und vorteilhafterweise aus Ethylacrylat (EA), n-Butylacrylat (BA) und Methylacrylat (MA) gewählt sind.

**4.** Zusammensetzung nach einem der Ansprüche 1 bis 3, dadurch gekennzeichnet, daß das Anhydrid der ungesättigten Dicarbonsäure, von dem sich die Terpolymeren (II) ableiten, Maleinsäureanhydrid ist.

**5.** Erzeugnisse, die durch die üblichen in der thermoplastischen Industrie angewandten Verarbeitungsverfahren aus den Zusammensetzungen nach den Ansprüchen 1 bis 4 erhalten wurden.

**6.** Erzeugnisse nach Anspruch 5, erhalten durch Strangpressen, insbesondere einlagige Rohre.

## Claims

**1.** Translucent and flexible composition based on polyamide resin, characterized in that it comprises:

(A) from 50% to 95% by weight

1) of at least one polyamide resin (I), the light transmission at 700 nm of which is greater than 15% and preferably greater than 30% (on a sheet 1 mm in thickness) and which at least one polyamide resin is chosen from polyamides which contain aliphatic units containing at least 7 carbon atoms and/or cycloaliphatic and/or aromatic units, blends of polymers containing at least 50% by weight of the above polyamides, in which the matrix phase consists of polyamide, and polyamide-based thermoplastic elastomers (TPE) also called polyetheramides;
2) of various additives (IV) such as stabilizers, mould-release agents, lubricants, crystallization accelerators, pigments, colorants or organic and/or mineral fillers, antioxidants.

3) optionally, of at least one plasticizer (V) representing from 0 to 50% of the weight of (A), preferably less than 20% of the weight of (A),

(B) from 5% to 50% by weight, and preferably from 10 to 40% by weight:

    (a) of at least one ethylene/alkyl (meth)acrylate/unsaturated dicarboxylic acid anhydride terpolymer (II) comprising from 77 to 99.2 mol% of at least one unit derived from ethylene, from 0 to 20 mol% of at least one unit derived from alkyl (meth)acrylate(s) and from 0.8 to 3 mol% of at least one unit derived from unsaturated dicarboxylic acid anhydride(s) and having a melt flow index of between 0.1 and 400 g/10 min (according to the NFT 51-016 standard, 190°C/2.16 kg load);

    (b) of at least one ethylene/alkyl (meth)acrylate copolymer (III) comprising at least 78 mol% of units derived from ethylene and up to 22 mol% of at least one unit derived from alkyl (meth)acrylate(s) and having a melt flow index of between 0.1 and 400 g/10 min (according to the NFT 51-016 standard, 190°C/2.16 kg load),

with the additional condition that the following relationship be satisfied:

    $1/30 \leq (b)/(a) \leq 2$, and preferably $(b)/(a) \leq 2/3$, the combination of the above characteristics resulting in the said composition having a flexural modulus, which can be measured according to the ISO 178 standard, of strictly less than 750 MPa.

2. Composition according to Claim 1, characterized in that the polyamide resin (I) is chosen from PA-11, PA-12 and/or PA-12,12.

3. Composition according to Claim 1 or 2, characterized in that the alkyl (meth)acrylate units from which the terpolymers (II) and/or the copolymers (III) derive are chosen from methyl, ethyl, n-butyl, isobutyl, 2-ethylhexyl and cyclohexyl acrylates and methyl and ethyl methacrylates, and advantageously from ethyl acrylate (EA), n-butyl acrylate (BA) and methyl acrylate (MA).

4. Composition according to one of Claims 1 to 3, characterized in that the unsaturated dicarboxylic acid anhydride from which the terpolymers (II) derive is maleic anhydride.

5. Materials obtained from the compositions according to one of Claims 1 to 4 by conventional conversion methods used in the thermoplastics industry.

6. Materials according to Maim 5, obtained by extrusion techniques, especially monolayer tubes.